# EUROPÄISCHE PATENTANMELDUNG

(11) **EP 4 624 537 A1**
(43) Veröffentlichungstag der Anmeldung: **01.10.2025**
(21) Anmeldenummer: 24165745.1
(22) Anmeldetag: 25.03.2024
(51) Int. Cl.: C09D 11/101, C09D 11/037, B29C 64/10, B33Y 10/00, B33Y 70/00

(54) **3D DRUCKERZEUGNISSE**

(71) Anmelder: LANXESS Deutschland GmbH, 50569 Köln (DE)
(72) Erfinder: BORST, Hans-Ulrich, 50189 Elsdorf (DE); JENTSCH, Jörg-Dietrich, 51381 Leverkusen (DE); KISCHKEVITZ, Marvin, 40217 Düsseldorf (DE); MAY, Lars, 40764 Langenfeld (DE)

(57) **Zusammenfassung**

Die vorliegende Erfindung betrifft Urethanacrylatharz basierte 3D Druckerzeugnisse mit einem Farbabstand ΔE <20 von den L*a*b* Koordinaten zu einer mit "6" beginnenden Farbnummer der RAL-Farbtabelle, enthaltend darin gelöst wenigstens einen grünen Anthrachinonfarbstoff, die Verwendung grüner Anthrachinonfarbstoffe zur Herstellung von 3D Druckerzeugnissen mit einem Farbabstand ΔE <20 von den L*a*b* Koordinaten zu einer mit "6" beginnenden Farbnummer der RAL-Farbtabelle mittels auf Fotopolymerisation basiertem 3D Druck, sowie ein Verfahren zur Steigerung der Lichtechtheit und der koloristischen Eigenschaften fotopolymerisierbarer, Urethanacrylatharz basierter Zusammensetzungen und daraus herzustellender 3D Druckerzeugnisse mit einem Farbabstand ΔE <20 von den L*a*b* Koordinaten zu einer mit "6" beginnenden Farbnummer der RAL-Farbtabelle mittels darin gelöst wenigstens eines grünen Anthrachinonfarbstoffs.

## Beschreibung

Die vorliegende Erfindung betrifft Urethanacrylatharz basierte 3D Druckerzeugnisse mit einem Farbabstand ΔE <20 von den L*a*b* Koordinaten zu einer mit "6" beginnenden Farbnummer der RAL-Farbtabelle, enthaltend wenigstens einen grünen Anthrachinonfarbstoff, die Verwendung grüner Anthrachinonfarbstoffe zur Herstellung von 3D Druckerzeugnissen mit einem Farbabstand ΔE <20 von den L*a*b* Koordinaten zu einer mit "6" beginnenden Farbnummer der RAL-Farbtabelle mittels auf Fotopolymerisation basiertem 3D Druck, sowie ein Verfahren zur Steigerung der Lichtechtheit und der koloristischen Eigenschaften fotopolymerisierbarer, Urethanacrylatharz basierter Zusammensetzungen und daraus herzustellender 3D Druckerzeugnisse mit einem Farbabstand ΔE <20 von den L*a*b* Koordinaten zu einer mit "6" beginnenden Farbnummer der RAL-Farbtabelle mittels wenigstens eines grünen Anthrachinonfarbstoffs.

### Stand der Technik

Farbmasterbatches enthalten Farbmittel in dispergierter oder gelöster Form. Die Farbe oder der Farbton eines Kunststofferzeugnisses dient unter anderem als Erkennungsmerkmal für Unternehmen oder für ein bestimmtes Produkt, als Schutzkomponente, als Sicherheitsmerkmal oder als funktionelles Additiv. Amorphe Kunststoffe wie Polystyrol, Polycarbonat, Polymethylmethacrylat u. a., deren Transparenz erhalten bleiben soll, bedingen den Einsatz von polymerlöslichen Farbstoffen. Im Gegensatz zu einem Pigment ist ein für den 3D Druck mittels Fotopolymerisation vorgesehenes Farbmittel vorzugsweise im zu verarbeitenden Kunststoffharz löslich und liegt nicht kolloidal vor.

Der 3D Druck ist eine Methode der additiven Fertigung. Diese bezeichnet einen Prozess, bei dem auf Basis von digitalen 3D Konstruktionsdaten durch das Ablagern von Material ein Bauteil schichtweise aufgebaut wird. "3D Druck" wird deshalb im Sinne der vorliegenden Erfindung als Synonym für eine additive Fertigung verwendet. Additive Fertigung beschreibt jedoch besser, dass es sich hier um ein Produktionsverfahren handelt, das sich deutlich von konventionellen, abtragenden Fertigungsmethoden unterscheidet. Anstatt ein Werkstück aus einem festen Block heraus zu fräsen, baut die additive Fertigung Bauteile Schicht für Schicht aus Werkstoffen auf, die beispielsweise als feines Pulver vorliegen. Als Materialien sind unterschiedliche Metalle, Kunststoffe und Verbundwerkstoffe verfügbar.

Der 3D Druck hat als Fertigungsmethode inzwischen in zahlreichen Bereichen und Branchen Einzug gehalten. Beim Bau von Anschauungs- und Funktionsprototypen, Klein- und Mittelserien und auch zunehmend in der Serienfertigung überzeugt dieses Verfahren mit Vorteilen, die mit anderen, konventionellen Methoden nicht erreicht werden können. So lassen sich Produktentwicklung und Markteinführung entscheidend verkürzen, Produktindividualisierungen oder Funktionsintegration gelingen in kürzerer Zeit - und das oftmals zu geringeren Kosten. Die additive Fertigung mittels 3D Druck eröffnet somit großen Originalausrüstungsherstellern (OEMs) aus unterschiedlichsten Industriezweigen die Möglichkeit, sich am Markt zu differenzieren - im Hinblick auf neue Kundennutzen, Kostenreduktionspotenziale und Nachhaltigkeitsziele. Beim 3D Druck werden 3D Druckerzeugnisse gedruckt, indem ein für die entsprechende Drucktechnik geeignetes Material automatisiert Schicht für Schicht selektiv in die gewünschte Form gebracht wird. Ein Originalausrüstungshersteller oder OEM ist ein Hersteller von Komponenten oder Produkten, der diese nicht selber in den Einzelhandel bringt; der Begriff "OEM" (im Gegensatz zu "Erstausrüster") wird in der Automobilindustrie synonym mit einem Fahrzeughersteller verwendet.

Für Kunststoffe gibt es unterschiedliche 3D-Druckverfahren. Darunter gibt es Verfahren, in denen der Kunststoff erst während des Druckens durch Aushärten erzeugt wird. Eine Ausführungsform ist der auf Fotopolymerisation basierende 3D Druck worin eine fotohärtende Harzflüssigkeit schichtweise aufgetragen und mittels Licht einem Fotohärtungsprozess bzw. einer Polymerisation oder einer lichtinduzierten Härtung unterzogen wird. Die selektive schichtweise Aushärtung des flüssigen Harzes erfolgt durch eine räumlich begrenzte, genau definierte, computergesteuerte Belichtung des Harzes mit Licht innerhalb eines für den Initiationsprozess der Fotopolymerisation geeigneten Spektralbereichs. Geeignet sind insbesondere UV-Licht, sichtbares Licht oder Infrarotlicht. Erfindungsgemäße, auf Fotopolymerisation beruhende 3D Druckverfahren sind vorzugsweise die Stereolithographie (SLA) und das Digital Light Processing (DLP). Der Aufbau entsprechender Geräte besteht bei beiden 3D-Druckvarianten aus einer Lichtquelle wobei die Belichtung von oben oder unten möglich ist, sogenannter "top-down" oder "bottom-up" Druck, einem Harz-Reservoir und einer Plattform, auf der die schichtweise Aushärtung des für den 3D Druck einzusetzenden Kunststoffharzes erfolgt. Beim SLA 3D Druck wird mit einem Laserstrahl punktweise durch Abrastern die auszuhärtende Fläche belichtet, beim DLP-Verfahren erfolgt die Belichtung über die gesamte zu belichtende Fläche, insbesondere mit einem LCD panel, wobei LCD für Liquid Crystal Display steht. Während eines typischen Druckvorganges wird die Druckplattform in das Harz im Harzreservoir eingetaucht, während das Belichtungsprogramm abläuft und eine Schicht erzeugt. Die wiederholte Erzeugung der Schichten ergibt schließlich das 3D Druckerzeugnis. Beim SLA Verfahren erzeugt ein Stereolithografiedrucker mittels Laser das 3D Druckerzeugnis. Aufgetragen wird dabei eine Kunststofflösung, die unter UV-Licht aushärtet. Entsprechende 3D Drucker werden als SLA-3D-Drucker bzw. DLP-3D-Drucker bezeichnet. Ein Vergleich der beiden Technologien sowie Anbieter entsprechender 3D Drucker findet sich im Übersichtsartikel: **3Dnatives, Regina P. 8.April 2021 unter https://www.3dnatives.com/de/sla-vs-dlp-3d-druck-080420211/**

US 2011/0070976 A1 beschreibt einen Golfball, der aus einem Kern, mindestens einer den Kern umhüllenden Schicht und einer auf der Oberfläche der äußersten Schicht der Hülle aufzubringenden Farbschicht mit fluoreszierendem Pigment besteht. Die äußerste Schicht kann auf einem thermoplastischen Polyurethanmaterial bestehen (Pandex^{®} T8290 oder Pandex^{®} T8283). Für die auf die äußerste Schicht aufzutragende Farbschicht wird in den Beispielen der grüne, fluoreszierende Perylenfarbstoff Solvent Green 5 (Sumiplast^{®} Yellow FL7G), 3,9-Perylenedicarbonsäure-bis(2-methylpropyl)ester der Formel (I) mit CAS No. 2744-50-5 eingesetzt. Der Ball verfügt über eine hervorragende Spinleistung und Haltbarkeit, ein Erscheinungsbild, das sich durch hervorragende Sichtbarkeit, Stil und Luxus auszeichnet, sowie eine hervorragende Wetterbeständigkeit.

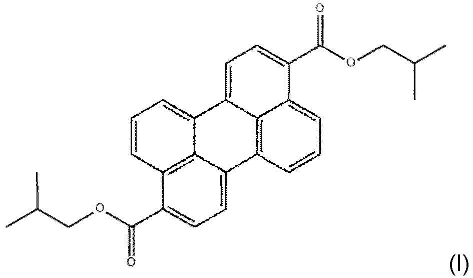

US 2019/0201171 A1 offenbart gefärbte, härtbare Zusammensetzungen zur Verwendung in einem additiven Fertigungsprozess, wobei die Zusammensetzung folgendes umfasst: eine härtbare Harzzusammensetzung, umfassend strahlungshärtbare Komponenten, einen Fotoinitiator und eine Farbstoffzusammensetzung umfassend einen Farbstoff D1 und einen Farbstoff D2, wobei Farbstoff D1 ein Lichtabsorptionsmaximum innerhalb eines Wellenlängenbereichs von 400 bis 530 nm aufweist und Farbstoff D2 ein Lichtabsorptionsmaximum innerhalb eines Wellenlängenbereichs von 540 bis 650 nm zeigt. Als Beispiel werden C.I. Solvent Red 111, CAS No. 82-38-2 (dye 1) und C.I. Solvent Violet 13, CAS No. 81-48-1 (dye 2) beschrieben. Beschrieben wird ferner ein S30 3D-Printer (Rapid Shape GmbH, Heimsheim, Germany) unter Anwendung eines LED-Lichts mit 405 nm Wellenlänge, mit 50 mW/cm² Intensität für 11 sec. pro aufzutragender Schicht.

Neben vorteilhaften Farbeigenschaften während und unmittelbar nach dem Herstellungsprozess eines 3D Druckerzeugnisses mittels Fotopolymerisation sind auch die Eigenschaften in der Verwendung solcher 3D Druckerzeugnisse zu beachten. Die im oben genannten Stand der Technik eingesetzten Farbmittel haben sich als unvorteilhaft erwiesen, weil es zu Farbänderungen durch die infolge der Fotopolymerisation erforderliche Lichteinwirkung im 3D Fertigungsprozess kommt. Die Empfindlichkeit gegenüber Licht, bzw. die Lichtechtheit, ist allerdings ein Qualitätsmerkmal für gefärbte 3D Druckerzeugnisse die mittels eines auf Fotopolymerisation basierenden 3D Drucks hergestellt werden. Möglichst vermieden werden soll ein Verblassen oder Verfärben bis hin zu einer Verbräunung eines 3D Druckerzeugnisses, das durch Fotopolymerisation basierten 3D Druck hergestellt wird.

Zudem sollen für den 3D Druck vorgesehene Farbmittel während der Fotopolymerisation, vorzugsweise nach dem SLA- oder DLP-Verfahren, ihre vorteilhaften anwendungstechnischen Eigenschaften beibehalten und dürfen nicht die Härtung/Polymerisation des 3D Druckerzeugnisses beeinträchtigen oder sogar unterbinden. Vorteilhafte anwendungstechnische Eigenschaften im Sinne der vorliegenden Erfindung sind bei den erfindungsgemäß für den 3D Druck einzusetzenden grünen Farbstoffen die Einstellung eines gewünschten bzw. definierten Farbtons und die Einstellung einer reinen, brillanten Farbe.

Aufgabe der vorliegenden Erfindung ist die Bereitstellung grüner Farbstoffe für den 3D Druck mittels Fotopolymerisation, insbesondere nach dem SLA- oder DLP-Verfahren, die es durch ihre Lösbarkeit im zu verarbeitenden Kunststoff erlauben einen definierten grünen Farbton einzustellen, während des Druckverfahrens lichtecht bleiben und zudem ihre koloristischen Eigenschaften beibehalten.

### Methode zur Bewertung der Lichtechtheit

Zur Bestimmung der Lichtechtheit von Farbstoffen für den auf Fotopolymerisation basierenden 3D Druck werden im Rahmen der vorliegenden Erfindung Prüfkörper in Form eines Quaders aus eingefärbtem Harz mit den Abmessungen Länge = 60 mm, Breite = 40 mm und Höhe = 2 mm mit einer Farbstoffkonzentration von 0,02% im Harz hergestellt. Diese Prüfkörper werden anschließend im druckfrischen Zustand nach **DIN EN ISO 4892-**2 mit Hilfe des Gerätes Xenotest Beta+ (Atlas Material Testing Technology GmbH, Linsengericht-Altenhaßlau, Deutschland) 95 - 100 h lang belichtet (Xenon Lampe). Die Bewertung der Lichtechtheit erfolgt farbmetrisch, indem mit einem Kugelspektralfotometer X-Rite Ci7800 (X-Rite GmbH, Planegg-Martinsried, Deutschland) Transmissionsspektren der belichteten Prüfkörper aufgenommen werden, wobei folgende Einstellungen gewählt werden: Messgeometrie = d/8°; Spektralintervall = 10 nm; Spektralbereich = 360 - 750 nm. Aus den dabei erhaltenen Transmissionsspektren werden mit folgenden Einstellungen anschließend die farbmetrischen Daten mit der Herstellersoftware des Kugelspektralfotometers berechnet: Lichtquelle/Beobachter = D65 / 10°; Farbraum = L*a*b*C*h°. Als Bewertungsgrundlage der Lichtechtheit werden die Farbabstände, angegeben als ΔE im L*a*b*C*h° Farbraum, zwischen belichteten Prüfkörpern und den entsprechenden nicht belichteten Prüfkörpern herangezogen. Je größer der Farbabstand ist, desto größer ist die Änderung des Farbeindruckes infolge des Einflusses der Belichtung und damit ist die Lichtechtheit umso schlechter. Zur Einordnung des ΔE wird ein Vergleich mit anderen grünen Farbstoffen als nicht erfindungsgemäße(s) Beispiel(e), deren Lichtechtheit in anderen Anwendungen, insbesondere in der Kunststoff Massefärbung, laut Herstellerangaben allgemein als gut bewertet wird, herangezogen.

### Methode zur Bewertung der Stabilität der koloristischen Eigenschaften

Um die Änderung der spektralen Eigenschaften, die die koloristischen Eigenschaften eines Farbstoffes bestimmen, zu ermitteln, werden im Rahmen der vorliegenden Erfindung die Absorptionsspektren vor und nach der lichtinduzierten Aushärtung der zu untersuchenden, eingefärbten Harze verglichen.

Die, wie im obigen Abschnitt "Methode zur Bewertung der Lichtechtheit" beschrieben, hergestellten eingefärbten Harze werden dazu in eine Quarzglasküvette mit einer Breite von 1 cm gefüllt und die Absorptionsspektren in Transmission mit dem Gerät x-Rite Ci7800 (X-Rite GmbH, Planegg-Martinsried, Deutschland) im Wellenlängenbereich von 360 bis 750 nm aufgenommen. Diese Absorptionsspektren werden danach um die Absorption des entsprechenden, nicht eingefärbten Harzes korrigiert, indem dieselbe Messung mit dem nicht eingefärbten Harz durchgeführt wird. Analog dazu werden die Absorptionsspektren in Transmission von den eingefärbten Prüfkörpern aufgenommen und korrigiert und die Spektren jeweils auf die Schichtdicke der Küvette bzw. des zu untersuchenden Prüfkörpers normiert.

Schließlich wird die Ähnlichkeit der Absorptionsspektren vor und nach dem 3D Druck aus den Messdaten ermittelt, indem man den Korrelationskoeffizient R der normierten Absorption (Spektralintervall 10 nm) berechnet. Je größer R ist, desto größer ist die Ähnlichkeit der Absorptionsspektren und desto stabiler sind die koloristischen Eigenschaften eines für Fotopolymerisation basierten 3D Druck vorgesehenen bzw. im Sinne der vorliegenden Erfindung geeigneten Farbstoffs.

### Erfindung

Lösung der Aufgabe und Gegenstand der vorliegenden Erfindung sind **3D Druckerzeugnisse** mit einem Farbabstand ΔE <20 von den L*a*b* Koordinaten einer mit "6" beginnenden Farbnummer der RAL-Farbtabelle, basierend auf fotopolymerisierbaren Zusammensetzungen enthaltend wenigstens ein Urethanacrylatharz und wenigstens einen grünen Anthrachinonfarbstoff mit einem Molekulargewicht im Bereich von 50 bis 1000 g/mol und mit einer nach **DIN EN ISO 7579:2010 DE** zu bestimmenden Löslichkeit in der Urethanacrylatharz basierten Zusammensetzung ≥ 0,05 g/L bei 23°C.

Gegenstand der vorliegenden Erfindung ist auch die **Verwendung** wenigstens eines grünen Anthrachinonfarbstoffs mit einem Molekulargewicht im Bereich von 50 bis 1000 g/mol zur Steigerung der nach **DIN EN ISO 4892-2** zu bestimmenden Lichtechtheit und koloristischen Eigenschaften fotopolymerisierbarer, Urethanacrylatharz basierter Zusammensetzungen und daraus herzustellender 3D Druckerzeugnisse mit einem Farbabstand ΔE <20 von den L*a*b* Koordinaten zu einer mit "6" beginnenden Farbnummer der RAL-Farbtabelle und einer nach **DIN EN ISO 7579:2010 DE** zu bestimmenden Löslichkeit des Farbstoffs in der Urethanacrylatharz basierten Zusammensetzung ≥ 0,05 g/L bei 23°C. Die Steigerung der Lichtechtheit und der koloristischen Eigenschaften wird durch Aufnahme von Transmissionsspektren vor und nach der lichtinduzierten Aushärtung von Prüfkörpern entsprechend eingefärbter Urethanacrylatharze mit einem Kugelspektralfotometer gemessen, danach um die Absorption des entsprechenden, nicht eingefärbten Harzes korrigiert und auf die Schichtdicke der Küvette bzw. des zu untersuchenden Prüfkörpers normiert sowie schließlich die Ähnlichkeit der Absorptionsspektren vor und nach dem 3D Druck aus den Messdaten ermittelt, indem man den Korrelationskoeffizient R der normierten Absorption berechnet.

Die Erfindung betrifft ferner ein **Verfahren** zur Steigerung der nach **DIN EN ISO 4892-2** zu bestimmenden Lichtechtheit und koloristischen Eigenschaften fotopolymerisierbarer, Urethanacrylatharz basierter Zusammensetzungen und daraus herzustellender 3D Druckerzeugnisse mit einem Farbabstand ΔE <20 von den L*a*b* Koordinaten zu einer mit "6" beginnenden Farbnummer der RAL-Farbtabelle, indem wenigstens ein grüner Anthrachinonfarbstoff mit einem Molekulargewicht im Bereich von 50 bis 1000 g/mol und einer nach **DIN EN ISO 7579:2010 DE** zu bestimmenden Löslichkeit in der Urethanacrylatharz basierten Zusammensetzung ≥ 0,05 g/L bei 23°C eingesetzt wird. Wie bei der erfindungsgemäßen Verwendung so wird die Steigerung der Lichtechtheit und der koloristischen Eigenschaften im erfindungsgemäßen Verfahren durch Aufnahme von Transmissionsspektren vor und nach der lichtinduzierten Aushärtung von Prüfkörpern entsprechend eingefärbter Urethanacrylatharze mit einem Kugelspektralfotometer gemessen, danach um die Absorption des entsprechenden, nicht eingefärbten Harzes korrigiert und auf die Schichtdicke der Küvette bzw. des zu untersuchenden Prüfkörpers normiert sowie schließlich die Ähnlichkeit der Absorptionsspektren vor und nach dem 3D Druck aus den Messdaten ermittelt, indem man den Korrelationskoeffizient R der normierten Absorption berechnet.

Die Erfindung betrifft schließlich auch ein **Verfahren zur additiven Fertigung** von 3D Druckerzeugnissen mit einem Farbabstand ΔE <20 von den L*a*b* Koordinaten zu einer mit "6" beginnenden Farbnummer der RAL-Farbtabelle, indem Urethanacrylatharz basierte Zusammensetzungen enthaltend wenigstens einen grünen Anthrachinonfarbstoff mit einem Molekulargewicht im Bereich von 50 bis 1000 g/mol und einer nach **DIN EN ISO 7579:2010 DE** zu bestimmenden Löslichkeit in der Urethanacrylatharz basierten Zusammensetzung ≥ 0,05 g/L bei 23°C in einem auf Fotopolymerisation basierten SLA-3D-Drucker oder DLP-3D-Drucker eingesetzt werden.

Zur Klarstellung sei angemerkt, dass vom Rahmen der vorliegenden Erfindung alle nachfolgend aufgeführten allgemeinen oder in Vorzugsbereichen genannten Definitionen und Parameter in beliebigen Kombinationen umfasst sind. Dies betrifft ebenso die Kombination der Mengenangaben zu den einzelnen Komponenten in Bezug auf die beanspruchten Verfahren und Verwendungen. Die im Rahmen dieser Anmeldung genannten Normen beziehen sich auf die zum Anmeldetag dieser Erfindung geltenden Fassung. Bei Prozentangaben handelt es sich, sofern nicht anders angegeben, um Gewichtsprozente.

**Tab.1 RAL-Farbtabelle für Grün**

| Im Rahmen der vorliegenden Erfindung gilt als Grün eine Farbe, die im RAL Farbsystem nach **https://de.wikipedia.org/wiki/RAL-Farbe#Grün** in der RAL Farbtabelle eine Farbnummer hat, die mit einer "6" beginnt. Im Einzelnen unterscheidet man zum Anmeldetag der vorliegenden Erfindung Grüntöne wie folgt: | | | | |
|---|---|---|---|---|
| | | L* | a* | b* |
| RAL 6000 | Patinagrün | 51 | -24 | 3 |
| RAL 6001 | Smaragdgrün | 46 | -27 | 22 |
| RAL 6002 | Laubgrün | 41 | -24 | 24 |
| RAL 6003 | Olivgrün | 42 | -5 | 13 |
| RAL 6004 | Blaugrün | 32 | -24 | -6 |
| RAL 6005 | Moosgrün | 31 | -25 | 4 |
| RAL 6007 | Flaschengrün | 26 | -6 | 11 |
| RAL 6008 | Braungrün | 29 | 0 | 8 |
| RAL 6009 | Tannengrün | 27 | -9 | 5 |
| RAL 6010 | Grasgrün | 50 | -21 | 25 |
| RAL 6011 | Resedagrün | 57 | -11 | 16 |
| RAL 6012 | Schwarzgrün | 32 | -7 | 0 |
| RAL 6013 | Schilfgrün | 57 | -1 | 15 |
| RAL 6014 | Gelboliv | 35 | 1 | 9 |
| RAL 6015 | Schwarzoliv | 33 | -1 | 5 |
| RAL 6016 | Türkisgrün | 45 | -37 | 6 |
| RAL 6017 | Maigrün | 56 | -23 | 28 |
| RAL 6018 | Gelbgrün | 63 | -31 | 39 |
| RAL 6019 | Weißgrün | 84 | -10 | 12 |
| RAL 6020 | Chromoxidgrün | 34 | -9 | 11 |
| RAL 6021 | Blassgrün | 67 | -9 | 14 |
| RAL 6022 | Braunoliv | 29 | 2 | 10 |
| RAL 6024 | Verkehrsgrün | 53 | -45 | 14 |
| RAL 6025 | Farngrün | 51 | -13 | 26 |
| RAL 6026 | Opalgrün | 42 | -33 | 0 |
| RAL 6027 | Lichtgrün | 76 | -19 | -4 |
| RAL 6028 | Kieferngrün | 40 | -18 | 6 |
| RAL 6029 | Minzgrün | 47 | -43 | 17 |
| RAL 6032 | Signalgrün | 53 | -39 | 13 |
| RAL 6033 | Minttürkis | 58 | -23 | -4 |
| RAL 6034 | Pastelltürkis | 72 | -16 | -6 |
| RAL 6035 | Perlgrün | 35 | -30 | 19 |
| RAL 6036 | Perlopalgrün | 39 | -30 | -2 |
| RAL 6037 | Reingrün | 55 | -54 | 39 |
| RAL 6038 | Leuchtgrün | 67 | -66 | 56 |
| RAL 6039 | Fasergrün | | | |

Dargestellt sind die für Grün geräteunabhängigen CIE L*a*b* Farbwerte für den jeweiligen RAL Wert: L* steht für die Luminanz, a* beschreibt den Farbort bezüglich der Rot-Grün-Achse und b* beschriebt den Farbort bezüglich der Gelb-Blau-Achse unter Verwendung von D65 Normlicht mit einem 10° Sichtfeld eines Normalbeobachters. Das Farbmodell ist in der **EN ISO 11664-4** "Colorimetry - Part 4: CIE 1976 L*a*b* Colour space" genormt. Zu L*a*b*-Farbraum (auch: CIELAB) siehe: **https://de.wikipedia.org/wiki/Lab-Farbraum.** Jede Farbe im Farbraum ist durch einen Farbort mit den kartesischen Koordinaten {L*, a*, b*} definiert. Die a*b*-Koordinatenebene wurde in Anwendung der Gegenfarbentheorie konstruiert. Auf der a*-Achse liegen sich Grün und Rot gegenüber, die b*-Achse verläuft zwischen Blau und Gelb. Komplementäre Farbtöne stehen sich jeweils um 180° gegenüber, in ihrer Mitte (dem Koordinatenursprung a*=0, b*=0) liegen alle unbunten Farben.

Die L*-Achse beschreibt die Helligkeit (Luminanz) der Farbe mit Werten von 0 bis 100. In der Darstellung steht diese im Nullpunkt senkrecht auf der a*b*-Ebene. Sie kann auch als Neutralgrauachse bezeichnet werden, denn zwischen den Endpunkten Schwarz (L*=0) und Weiß (L*=100) sind alle unbunten Farben (Grautöne) enthalten. Die a*-Achse beschreibt den Grün- oder Rotanteil einer Farbe, wobei negative Werte für Grün und positive Werte für Rot stehen. Die b*-Achse beschreibt den Blau- oder Gelbanteil einer Farbe, wobei negative Werte für Blau und positive Werte für Gelb stehen.

Die a*-Werte reichen von ca. -170 bis +100, die b*-Werte von -100 bis +150, wobei die Maximalwerte nur bei mittlerer Helligkeit bestimmter Farbtöne erreicht werden. Der CIELAB-Farbkörper hat im mittleren Helligkeitsbereich seine größte Ausdehnung, die aber je nach Farbbereich unterschiedlich in Höhe und Größe ist.

Erfindungsgemäß umfasst sind zu Grün ähnliche Farbtöne die einen Farbabstand ΔE <20 von den L*a*b* Koordinaten zu einer mit "6" beginnenden Farbnummer der RAL-Farbtabelle aufweisen.

### Erfindungsgemäß bevorzugte grüne Anthrachinonfarbstoffe

Anthrachinonfarbstoffe sind eine umfangreiche Gruppe von Farbstoffen, mit Anthrachinon als gemeinsamem Strukturelement. Anthrachinon selbst ist farblos - durch Einführung von Elektronendonator-Gruppen, wie z. B. Hydroxy- oder Aminogruppen in die 1-, 4-, 5- oder 8-Position erhält man rote bis blaue Farbstoffe. Vertreter der Anthrachinonfarbstoffe findet man sowohl bei den Naturfarbstoffen, als auch bei den synthetischen Farbstoffen. Anthrachinonfarbstoffe sind bei den Beizen- und Küpenfarbstoffen, aber auch bei den Reaktiv- und Dispersionsfarbstoffen vertreten. Sie zeichnen sich durch eine sehr gute Lichtechtheit aus.

Einer der wichtigsten natürlichen Anthrachinonfarbstoffe pflanzlichen Ursprungs ist Alizarin, das aus dem Färberkrapp (Rubia tinctorum) gewonnen wird. Alizarin ist der Namensgeber für eine Reihe strukturell verwandter Farbstoffe, die Alizarinfarbstoffe (mitunter synonym für die Anthrachinonfarbstoffe verwendet).

### https://de.wikipedia.org/wiki/Anthrachinonfarbstoffe

Erfindungsgemäß einzusetzende grüne Anthrachinonfarbstoffe zeichnen sich vorzugsweise durch weitere folgende Merkmale aus:
- Molekulargewicht im Bereich von 50 bis 1.000 g/mol
- Löslichkeit in der härtbaren Zusammensetzung mindestens 0,05 g/L bei 23°C
- Lichtabsorptionsmaximum in einem Wellenlängenbereich von 560 bis 700 nm
- sehr gute Lichtechtheit im 3D Objekt
- hohe Stabilität der koloristischen Eigenschaften gegenüber dem Härtungsprozess
- beinhalten wenigstens eine Anthrachinoneinheit.

Vorzugsweise liegt der erfindungsgemäß einzusetzende grüne Anthrachinonfarbstoff im Urethanacrylatharz in gelöster Form vor.

Erfindungsgemäß ganz besonders bevorzugt ist ein grüner Anthrachinonfarbstoff auszuwählen aus der Gruppe 1,4-Bis(p-tolylamino)anthrachinon, 1,4-Bis[[4-(1,1-dimethylethyl)phenyl]amino]-5,8-dihydroxyanthrachinon und 1,4-Bis(4-butylanilino)-5,8-dihydroxyanthrachinon.

Die genannten bevorzugten Vertreter grüner Anthrachinonfarbstoffe sind 1,4-Bis(p-tolylamino)anthrachinon, bekannt als Macrolex^{®} Grün 5B oder Solvent Green 3, erhältlich bei der LANXESS Deutschland GmbH, Köln, CAS No. 128-80-3 gemäß Formel (II) 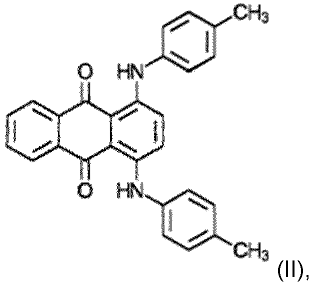 das 1,4-Bis[[4-(1,1-dimethylethyl)phenyl]amino]-5,8-dihydroxyanthrachinon, bekannt als Macrolex^{®} Grün G, CAS No. 4851-50-7, mit der Formel (III) 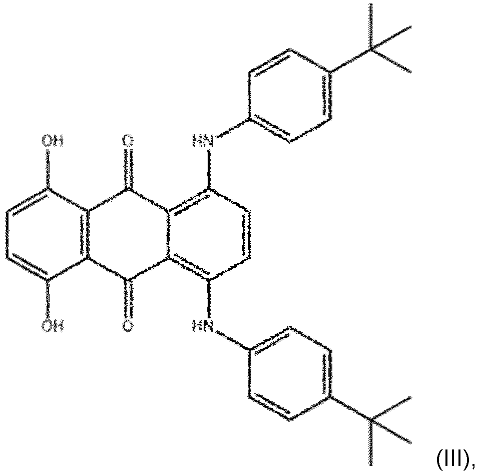 ebenfalls erhältlich bei der LANXESS Deutschland GmbH, Köln, sowie 1,4-Bis(4-butylanilino)-5,8-dihydroxyanthrachinon der Formel (IV) 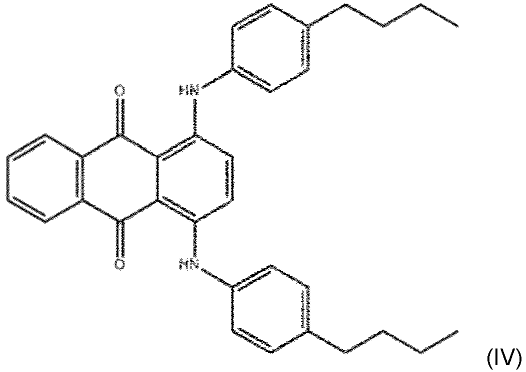 mit der CAS No. 42980-14-3, erhältlich bei Henan Kanbei Chemical Co. Ltd, Zhejiang.

### Bevorzugte Ausführungsformen der Erfindung

Vorzugsweise weisen die erfindungsgemäß einzusetzenden Urethanacrylatharz basierten Zusammensetzungen und daraus herzustellende 3D Druckerzeugnisse einen Farbabstand ΔE <10 von den L*a*b* Koordinaten zu einer mit "6" beginnenden Farbnummer der RAL-Farbtabelle für die Farbe Grüne auf.

Besonders bevorzugt weisen die erfindungsgemäß einzusetzenden Urethanacrylatharz basierten Zusammensetzungen und daraus herzustellende 3D Druckerzeugnisse einen Farbabstand ΔE <5 von den L*a*b* Koordinaten zu einer mit "6" beginnenden Farbnummer der RAL-Farbtabelle für die Farbe Grüne auf.

Vorzugsweise betrifft die Erfindung 3D Druckerzeugnisse mit einem Farbabstand ΔE <20 von den L*a*b* Koordinaten einer mit "6" beginnenden Farbnummer der RAL-Farbtabelle basierend auf Zusammensetzungen für die **additive Fertigung von 3D Druckerzeugnissen mittels auf Fotopolymerisation basiertem 3D Druck,** enthaltend wenigstens ein Urethanacrylatharz und wenigstens einen grünen Anthrachinonfarbstoff mit einem Molekulargewicht im Bereich von 50 bis 1000 g/mol und einer nach **DIN EN ISO 7579:2010 DE** zu bestimmenden Löslichkeit des Farbstoffs in der Urethanacrylatharz basierten Zusammensetzung ≥ 0,05 g/L bei 23°C.

Vorzugsweise betrifft die Erfindung ein **Verfahren zur Steigerung der nach DIN EN ISO 4892-2** zu bestimmenden Lichtechtheit und koloristischen Eigenschaften fotopolymerisierbarer, Urethanacrylatharz basierter Zusammensetzungen und daraus resultierender bzw. herzustellender 3D Druckerzeugnisse mit einem Farbabstand ΔE <20 von den L*a*b* Koordinaten einer mit "6" beginnenden Farbnummer der RAL-Farbtabelle **mittels additiver Fertigung im 3D Druck,** indem wenigstens ein grüner Anthrachinonfarbstoff mit einem Molekulargewicht im Bereich von 50 bis 1000 g/mol und einer nach **DIN EN ISO 7579:2010 DE** zu bestimmenden Löslichkeit in der Urethanacrylatharz-basierten Zusammensetzung ≥ 0,05 g/L bei 23°C eingesetzt wird.

Vorzugsweise betrifft die Erfindung die **Verwendung** wenigstens eines grünen Anthrachinonfarbstoffs mit einem Molekulargewicht im Bereich von 50 bis 1000 g/mol zur Steigerung der nach **DIN EN ISO 4892-2** zu bestimmenden Lichtechtheit und koloristischen Eigenschaften fotopolymerisierbarer, Urethanacrylatharz basierter Zusammensetzungen und daraus resultierender bzw. herzustellender 3D Druckerzeugnisse mit einem Farbabstand ΔE <20 von den L*a*b* Koordinaten einer mit "6" beginnenden Farbnummer der RAL-Farbtabelle **mittels additiver Fertigung im 3D Druck** und mit einer nach **DIN EN ISO 7579:2010 DE** zu bestimmenden Löslichkeit des Farbstoffs in der Urethanacrylatharz basierten Zusammensetzung ≥ 0,05 g/L bei 23°C.

Vorzugsweise betrifft die Erfindung 3D Druckerzeugnisse, eine erfindungsgemäße Verwendung, sowie ein erfindungsgemäßes Verfahren zur Steigerung der Lichtechtheit und der koloristischen Eigenschaften von 3D Druckerzeugnissen worin auf 20 bis 99,995 Massenanteile Urethanacrylat basiertem Harz, das vorzugsweise Additive enthält, 0,005 bis 5 Massenanteile Anthrachinonfarbstoff eingesetzt werden.

Besonders bevorzugt werden zusätzlich zum wenigstens einen Anthrachinonfarbstoff noch 0,5 - 10 Massenanteile Fotoinitiator, der vorzugsweise in Wellenlängenbereich von 300 bis 450 nm absorbiert, im Urethanacrylatharz eingesetzt.

Ganz besonders bevorzugt werden zusätzlich zum wenigstens einen Anthrachinonfarbstoff und zu den 0,5 -10 Massenanteilen Fotoinitiator 0,001 -1 Massenanteile wenigstens eines Additivs im Urethanacrylatharz eingesetzt, wobei bevorzugte Additive im Sinne der vorliegenden Erfindung wenigstens ein Egalisiermittel, wenigstens ein Stabilisator, wenigstens ein zusätzlicher Farbstoff verschieden vom Anthrachinonfarbstoff, wenigstens ein Füllstoff oder wenigstens ein organisches Pigment ist.

### Urethanacrylat basierte Harze

Erfindungsgemäß bevorzugte fotopolymerisierbare Urethanacrylat basierte Harze, insbesondere für die additive Fertigung im 3D Druck, basieren auf Polyurethanacrylat [CAS No. 82116-59-4], Polyetherurethanacrylat oder Urethanacrylatharzen. Verwiesen sei auf WO 2005/028532 A1**,** RU 2546966 C1 **oder** M. Alishiri et al., Materials Science and Engineering: C, Vol. 42, September 2014, S. 763-773**.**

Im Rahmen der vorliegenden Erfindung wird eingesetzt und ist daher besonders bevorzugt "3D Printing UV Sensitive Resin Clear" der Shenzhen Anycubic Technology Co., Ltd, China; ein farbloses Harz für den lichtinduzierten 3D Druck mit hoher Druckgeschwindigkeit enthaltend 30 - 60 % Polyurethanacrylat CAS No. 82116-59-4; 10 - 40 % Isooctylacrylat CAS No. 29590-42-9; 2 - 5 % Fotoinitiator.

Erfindungsgemäß einzusetzende fotopolymerisierbare Harze enthalten vorzugsweise neben dem wenigstens einen Farbstoff in der Regel ein Gemisch aus wenigstens einem polymerisierbaren Monomer, vorzugsweise ein Acrylat, und/oder Präpolymerisat, vorzugsweise ein (Poly-)urethanacrylat, wenigstens einen Fotoinitiator und wenigstens ein Additiv. Im Hinblick auf solche Zusatzstoffe sei prinzipiell auf WO 2018/038954 A1 verwiesen, deren Inhalt von der vorliegenden Beschreibung vollumfänglich umfasst ist. Nachstehend werden bevorzugt einzusetzende Fotoinitiatoren und Additive aufgeführt.

### Fotoinitiator

Ein erfindungsgemäß einzusetzender Fotoinitiator ist in der Regel durch eines oder mehrere der folgenden Merkmale gekennzeichnet,
- mit Lichtabsorptionsband(en) in einem Wellenlängenbereich von 300 bis 450 nm und/oder einer Löslichkeit in der härtbaren Zusammensetzung von mindestens 2 g/l bei 23 °C;
- einer Löslichkeit in den strahlenhärtbaren Komponenten der härtbaren Harzzusammensetzung und/oder in den gegebenenfalls anwesenden Additiv(en);
- einer Fähigkeit eine Polymerisationsreaktion-einleitende Spezies zu bilden, wenn er Lichtenergie mit einer Wellenlänge zwischen 300 und 450 nm ausgesetzt wird, z.B. durch freie Radikale.

Erfindungsgemäß insbesondere bevorzugt wird wenigstens ein Fotoinitiator aus der Reihe 2-Hydroxy-2-methyl-1-phenylaceton, 1-Hydroxycyclohexylphenylketon, 2,4,6-Trimethylbenzoyl-Diphenylphosphinoxide, Phenylbis(2,4,6-Trimethylbenzoyl)phosphin-oxide, Ethyl-2,4,6-trimethylbenzoylphenylphosphonat eingesetzt.

### Additive

Eine erfindungsgemäß für den 3D Druck einzusetzende fotopolymerisierbare Harzzusammensetzung kann vorzugsweise wenigstens ein Additiv, Stabilisator(en) oder Mischungen davon, enthalten.

Insbesondere kann die Zugabe von Stabilisator(en) zur härtbaren Zusammensetzung dazu beitragen, die Auflösung und Genauigkeit des SLA-Prozesses zu verbessern, indem unerwünschte Streueffekte abgeschwächt oder vermieden werden, sowie die Haltbarkeit der härtbaren Zusammensetzung zu verlängern. Solche Stabilisatoren enthalten häufig eine Phenoleinheit. Bevorzugt sind p-Methoxyphenol (MOP), Hydrochinonmonomethylether (MEHQ), 2,6-Di-tert-butyl-4-methyl-phenol (BHT; lonol), Phenothiazin, 2,2,6,6-Tetramethyl-piperidin-1-oxylrest (TEMPO) und deren Mischungen. Solche Stabilisator(en) werden vorzugsweise in folgenden Mengen eingesetzt:
- Untere Menge: mindestens 0,001 oder mindestens 0,005 oder mindestens 0,01 Gew.-%;
- Obermenge: höchstens 0,02 oder höchstens 0,05 oder höchstens 0,5 höchstens 1 Gew.-%;
- Bereich: von 0,001 bis 1 oder von 0,005 bis 0,05 Gew.-%;
wobei die Gew.-% sich auf das Gewicht der härtbaren Zusammensetzung beziehen.

Das Verfahren zur Steigerung der nach **DIN EN ISO 4892-2** zu bestimmenden Lichtechtheit und koloristischen Eigenschaften fotopolymerisierbarer, Urethanacrylatharz basierter Zusammensetzungen wird vorzugsweise in der additiven Fertigung von 3D Druckerzeugnissen, besonders bevorzugt in der additiven Fertigung mittels Fotopolymerisation, insbesondere bevorzugt in der additiven Fertigung von 3D Druckerzeugnissen mittels eines auf Fotopolymerisation basierten SLA-3D-Druckers oder DLP-3D-Druckers, angewandt.

Deshalb betrifft die vorliegende Erfindung zudem und vorzugsweise ein Verfahren zur additiven Fertigung von 3D Druckerzeugnissen mit einem Farbabstand ΔE <20 von den L*a*b* Koordinaten zu einer mit "6" beginnenden Farbnummer der RAL-Farbtabelle, indem Urethanacrylatharz basierte Zusammensetzungen enthaltend wenigstens einen grünen Anthrachinonfarbstoff mit einem Molekulargewicht im Bereich von 50 bis 1000 g/mol und einer nach **DIN EN ISO 7579:2010 DE** zu bestimmenden Löslichkeit in der Urethanacrylatharz basierten Zusammensetzung ≥ 0,05 g/L bei 23°C in einem auf Fotopolymerisation basierten SLA-3D-Drucker oder DLP-3D-Drucker eingesetzt werden und der grüne **Anthrachinonfarbstoff** auszuwählen ist aus 1,4-Bis(p-tolylamino)anthrachinon und/oder 1,4-Bis[[4-(1,1-dimethylethyl)phenyl]amino]-5,8-dihydroxyanthrachinon.

Die Erfindung betrifft schließlich bevorzugt aber auch ein Verfahren zur additiven Fertigung von 3D Druckerzeugnissen mit einem Farbabstand ΔE <20 von den L*a*b* Koordinaten zu einer mit "6" beginnenden Farbnummer der RAL-Farbtabelle, indem Urethanacrylatharz basierte Zusammensetzungen enthaltend wenigstens einen grünen Anthrachinonfarbstoff mit einem Molekulargewicht im Bereich von 50 bis 1000 g/mol und einer nach **DIN EN ISO 7579:2010 DE** zu bestimmenden Löslichkeit in der Urethanacrylatharz basierten Zusammensetzung ≥ 0,05 g/L bei 23°C in einem auf Fotopolymerisation basierten SLA-3D-Drucker oder DLP-3D-Drucker eingesetzt werden, wobei der **Anthrachinonfarbstoff** auszuwählen ist aus 1,4-Bis(p-tolylamino)anthrachinon und/oder 1,4-Bis[[4-(1,1-dimethylethyl)phenyl]amino]-5,8-dihydroxyanthrachinon.

### BEISPIELE

### Methode zur Bestimmung der Lichtechtheit von Farbstoffen in 3D Drucken

Zur Bestimmung der Lichtechtheit von Farbstoffen in 3D Drucken wurden im Rahmen der vorliegenden Erfindung Prüfkörper aus eingefärbtem Harz auf Basis von Harzzusammensetzung 1 (siehe Tab.6) mit einer Farbstoffkonzentration von 0,02 Gew.-% im Harz hergestellt. Als Prüfkörper wurde ein Quader mit den folgenden Abmessungen mittels 3D Druck aus dem eingefärbtem Harz hergestellt.

| | |
|---|---|
| • | Länge 60 mm |
| • | Breite 40 mm |
| • | Höhe 2 mm |

Die Prüfkörper wurden nach **DIN EN ISO 4892-2** mit Hilfe des Gerätes Xenotest Beta+ (Atlas Material Testing Technology GmbH, Linsengericht-Altenhaßlau, Deutschland) 95 - 100 h lang belichtet (Xenon Lampe).

Die Bewertung der Lichtechtheit erfolgte farbmetrisch. Dazu wurden mit dem Kugelspektralfotometer X-Rite Ci7800 (X-Rite GmbH, Planegg-Martinsried, Deutschland) Transmissionsspektren der belichteten Prüfkörper aufgenommen. Dabei wurden folgende Einstellungen gewählt:

| | | |
|---|---|---|
| • | Messgeometrie | d/8° |
| • | Spektralintervall | 10 nm |
| • | Spektralbereich | 360 - 750 nm |

Aus den Transmissionsspektren wurden mit folgenden Einstellungen die farbmetrischen Daten mit der Herstellersoftware des Kugelspektralfotometers berechnet:

| | | |
|---|---|---|
| • | Lichtquelle/Beobachter | D65 / 10° |
| • | Farbraum | L*a*b*C*h° |

Als Bewertungsgrundlage der Lichtechtheit wurden die Farbabstände, angegeben als ΔE im L*a*b*C*h° Farbraum zwischen belichteten Prüfkörpern und den entsprechenden nicht belichteten Prüfkörper herangezogen. Je größer der Farbabstand war, desto größer war die Änderung des Farbeindruckes infolge des Einflusses der Belichtung und damit war die Lichtechtheit umso schlechter. Zur Einordnung des ΔE wurde ein Vergleich mit nicht erfindungsgemäßem Perylenfarbstoff Solvent Green 5 (Sumiplast^{®} Yellow FL7G), CAS No. 2744-50-5 (siehe nicht erfindungsgemäße Beispiele), dessen Lichtechtheit in anderen Anwendungen (z.B. Kunststoff Massefärbung) laut Herstellerangaben allgemein als gut bewertet wird, herangezogen.

**Tab.2: Bewertung der Lichtechtheit**

| **ΔE nach Belichtung in % *** | **Bewertung** | **Kürzel** |
|---|---|---|
| ≤ 50 | Exzellent | A |
| > 50 - 70 | Gut | B |
| > 70 - 90 | Befriedigend | C |
| > 90 | Mäßig bis unzureichend | D |

| | | |
|---|---|---|
| ** im Vergleich zum ΔE des nicht erfindungsgemäßen Beispiels* | | |

### Methode zur Bewertung der Stabilität der koloristischen Eigenschaften

Um die Änderung der spektralen Eigenschaften, die die koloristischen Eigenschaften eines Farbstoffes bestimmen, zu ermitteln, wurden die Absorptionsspektren vor und nach der lichtinduzierten Aushärtung des eingefärbten Harzes auf Basis von Harzzusammensetzung 1 verglichen.

Die wie zuvor beschrieben hergestellten eingefärbten Harze wurden in eine Quarzglasküvette mit einer Breite von 1 cm gefüllt. Daraufhin wurden Absorptionsspektren in Transmission mit dem Gerät x-Rite Ci7800 (X-Rite GmbH, Planegg-Martinsried, Deutschland) im Wellenlängenbereich von 360 - 750 nm aufgenommen. Diese wurden um die Absorption des entsprechenden nicht eingefärbten Harzes korrigiert, indem dieselbe Messung mit dem nicht eingefärbten Harz durchgeführt wurde. Analog dazu wurden die Absorptionsspektren in Transmission von den eingefärbten Prüfkörpern aufgenommen und korrigiert. Die Spektren wurden jeweils auf die Schichtdicke der Küvette bzw. des Prüfkörpers normiert.

Dann wurde die Ähnlichkeit der Absorptionsspektren vor und nach dem 3D Druck aus den Messdaten berechnet. Dazu wurde der Korrelationskoeffizient R der normierten Absorption (Spektralintervall 10 nm) berechnet. Je größer R war, desto größer war die Ähnlichkeit der Absorptionsspektren und damit desto stabiler die koloristischen Eigenschaften des Farbstoffes beim 3D Druck.

**Tab.3: Bewertung der Stabilität bzw. Erhaltung der koloristischen Eigenschaften**

| **R** | **Bewertung** | **Kürzel** |
|---|---|---|
| 0,9 - 1 | Hervorragende Erhaltung | A |
| 0,7 - < 0,9 | Gut erhalten | B |
| 0,6 - < 0,7 | Überwiegend erhalten | C |
| 0 - < 0,6 | Auffällige Farbabweichung, unzureichend | D |

Die Herstellung und Prüfung der eingefärbten 3D Drucke erfolgte nach den oben beschriebenen Methoden in drei Harzzusammensetzungen mit unterschiedlichen Eigenschaften (siehe Materialien). In Harzzusammensetzung 1 wurden außerdem exemplarisch Farbstoffgemische untersucht.

**Tab.4: Erfindungsgemäße Beispiele in Harzzusammensetzung "3D Printing UV Sensitive Resin Clear" der Shenzhen Anycubic Technology Co., Ltd**

| **Farbstoff** | **ΔE in % *** | **Bewertung Belichtung** | **R** | **Bewertung R** |
|---|---|---|---|---|
| Macrolex^{®} Grün 5B | 44 | A | 0,95 | A |
| Macrolex^{®} Grün G | 35 | A | 0,95 | A |

| | | | | |
|---|---|---|---|---|
| ** im Vergleich zum ΔE des nicht erfindungsgemäßen Beispiels* | | | | |

**Tab.5: Nicht erfindungsgemäßes Beispiel eines grünen Farbstoffs in Harzzusammensetzung "3D Printing UV Sensitive Resin Clear" der Shenzhen Anycubic Technology Co., Ltd**

| **Farbstoff** | **ΔE** | **Bewertung Belichtung** | **R** | **Bewertung R** |
|---|---|---|---|---|
| Solvent Green 5 | Vergleich | D | 0,84 | B |

### Edukte

**Tab.6: Einsatzmaterialien und Bezugsquellen**

| **Material** | **Beschreibung** | **Bezugsquelle** |
|---|---|---|
| 3D Printing UV Sensitive Resin Clear (bezeichnet als **Harzzusammensetzung**) | Farbloses Harz für den lichtinduzierten 3D Druck mit hoher Druckgeschwindigkeit (30 - 60 % Polyurethanacrylate CAS 82116-59-4; 10 - 40 % Isooctylacrylat CAS 29590-42-9; 2 - 5 % Photoinitiator) | Shenzhen Anycubic Technology Co., Ltd |
| 1,4-Bis[[4-(1,1-dimethylethyl)phenyl]amino]-5,8-dihydroxyanthrachinon | Anthrachinonfarbstoff, Macrolex^{®} Grün G | Lanxess Deutschland GmbH |
| | CAS No. 28198-05-2 | |
| 1,4-Bis(p-tolylamino)anthrachinon | Anthrachinonfarbstoff, Macrolex^{®} Grün 5B, | Lanxess Deutschland GmbH |
| | CAS No. 128-80-3 | |
| 3,9-Perylenedicarboxylic acid-bis(2-methylpropyl) ester | Perylenfarbstoff, Solvent Green 5, | Chemos GmbH & Co. KG |
| | CAS No. 2744-50-5 | |

## Patentansprüche

1. 3D Druckerzeugnisse mit einem Farbabstand ΔE <20 von den L*a*b* Koordinaten einer mit "6" beginnenden Farbnummer der RAL-Farbtabelle, basierend auf fotopolymerisierbaren Zusammensetzungen enthaltend wenigstens ein Urethanacrylatharz und wenigstens einen grünen Anthrachinonfarbstoff mit einem Molekulargewicht im Bereich von 50 bis 1000 g/mol und mit einer nach DIN EN ISO 7579:2010 DE zu bestimmenden Löslichkeit in der Urethanacrylatharz basierten Zusammensetzung ≥ 0,05 g/L bei 23°C.

2. 3D Druckerzeugnisse gemäß Anspruch 1, **dadurch gekennzeichnet, dass** das Urethanacrylatharz auf Urethanacrylat, Polyurethanacrylat oder Polyetherurethanacrylat basiert.

3. 3D Druckerzeugnisse gemäß der Ansprüche 1 oder 2, **dadurch gekennzeichnet, dass** der grüne Anthrachinonfarbstoff sich durch die Merkmale Molekulargewicht im Bereich von 50 bis 1.000 g/mol, einem Lichtabsorptionsmaximum in einem Wellenlängenbereich von 560 bis 700 nm, und durch wenigstens eine Anthrachinoneinheit im Molekül auszeichnet.

4. 3D Druckerzeugnisse gemäß einem oder mehreren der Ansprüche 1 bis 3, **dadurch gekennzeichnet, dass** der grüne Anthrachinonfarbstoff auszuwählen ist aus der Gruppe 1,4-Bis(p-tolylamino)anthrachinon, 1,4-Bis[[4-(1,1-dimethylethyl)phenyl]amino]-5,8-dihydroxyanthrachinon und 1,4-Bis(4-butylanilino)-5,8-dihydroxyanthrachinon.

5. Verwendung wenigstens eines grünen Anthrachinonfarbstoffs zur Steigerung der nach DIN EN ISO 4892-2 zu bestimmenden Lichtechtheit und der koloristischen Eigenschaften fotopolymerisierbarer, Urethanacrylatharz basierter Zusammensetzungen und daraus herzustellender 3D Druckerzeugnisse, **dadurch gekennzeichnet, dass** dieser Anthrachinonfarbstoff ein Molekulargewicht im Bereich von 50 bis 1000 g/mol und in der Urethanacrylatharz-basierten Zusammensetzung eine Löslichkeit ≥ 0,05 g/L bei 23°C aufweist mit der Maßgabe, dass die Urethanacrylatharz basierten Zusammensetzungen und daraus resultierende 3D Druckerzeugnisse einen Farbabstand ΔE <20 von den L*a*b* Koordinaten zu einer mit "6" beginnenden Farbnummer der RAL-Farbtabelle aufweisen.

6. Verwendung gemäß Anspruch 6 **dadurch gekennzeichnet, dass** die Steigerung der Lichtechtheit und der koloristischen Eigenschaften durch Aufnahme von Transmissionsspektren vor und nach der lichtinduzierten Aushärtung von Prüfkörpern entsprechend eingefärbter Urethanacrylatharze mit einem Kugelspektralfotometer gemessen, danach um die Absorption des entsprechenden, nicht eingefärbten Harzes korrigiert und auf die Schichtdicke der Küvette bzw. des zu untersuchenden Prüfkörpers normiert sowie schließlich die Ähnlichkeit der Absorptionsspektren vor und nach dem 3D Druck aus den Messdaten ermittelt wird, indem man den Korrelationskoeffizient R der normierten Absorption berechnet.

7. Verwendung gemäß der Ansprüche 5 oder 6, **dadurch gekennzeichnet, dass** die Urethanacrylatharz basierten Zusammensetzungen auf Urethanacrylat, auf Polyurethanacrylat oder auf Polyetherurethanacrylat basieren.

8. Verwendung gemäß einem oder mehreren der Ansprüche 5 bis 7, **dadurch gekennzeichnet, dass** der grüne Anthrachinonfarbstoff sich durch die Merkmale Molekulargewicht im Bereich von 50 bis 1.000 g/mol, einem Lichtabsorptionsmaximum in einem Wellenlängenbereich von 560 bis 700 nm, und durch wenigstens eine Anthrachinoneinheit im Molekül auszeichnet.

9. Verwendung gemäß einem oder mehreren der Ansprüche 5 bis 8, **dadurch gekennzeichnet, dass** der grüne Anthrachinonfarbstoff auszuwählen ist aus der Gruppe 1,4-Bis(p-tolylamino)anthrachinon, 1,4-Bis[[4-(1,1-dimethylethyl)phenyl]amino]-5,8-dihydroxyanthrachinon und 1,4-Bis(4-butylanilino)-5,8-dihydroxyanthrachinon.

10. Verfahren zur Steigerung der nach DIN EN ISO 4892-2 zu bestimmenden Lichtechtheit und koloristischen Eigenschaften fotopolymerisierbarer, Urethanacrylatharz basierter Zusammensetzungen und daraus resultierender 3D Druckerzeugnisse, **dadurch gekennzeichnet, dass** wenigstens ein grüner Anthrachinonfarbstoff mit einem Molekulargewicht im Bereich von 50 bis 1000 g/mol und einer Löslichkeit in der Urethanacrylatharz basierten Zusammensetzung ≥ 0,05 g/L bei 23°C eingesetzt wird mit der Maßgabe, dass die Urethanacrylatharz basierten Zusammensetzungen einen Farbabstand ΔE <20 von den L*a*b* Koordinaten zu einer mit "6" beginnenden Farbnummer der RAL-Farbtabelle aufweisen.

11. Verfahren gemäß Anspruch 10, **dadurch gekennzeichnet, dass** die Steigerung der Lichtechtheit und der koloristischen Eigenschaften durch Aufnahme von Transmissionsspektren vor und nach der lichtinduzierten Aushärtung von Prüfkörpern entsprechend eingefärbter Urethanacrylatharze mit einem Kugelspektralfotometer gemessen, danach um die Absorption des entsprechenden, nicht eingefärbten Harzes korrigiert und auf die Schichtdicke der Küvette bzw. des zu untersuchenden Prüfkörpers normiert sowie schließlich die Ähnlichkeit der Absorptionsspektren vor und nach dem 3D Druck aus den Messdaten ermittelt wird, indem man den Korrelationskoeffizient R der normierten Absorption berechnet.

12. Verfahren gemäß Anspruch 10 oder 11, **dadurch gekennzeichnet, dass** der Einsatz des wenigstens einen grünen Anthrachinonfarbstoffs in der additiven Fertigung von 3D Druckerzeugnissen im auf Fotopolymerisation basiertem 3D Druck vorgesehen ist.

13. Verfahren gemäß einem oder mehreren der Ansprüche 10 bis 12, **dadurch gekennzeichnet, dass** die Urethanacrylatharz basierten Zusammensetzungen auf Urethanacrylat, auf Polyurethanacrylat oder auf Polyetherurethanacrylat basieren.

14. Verfahren gemäß einem oder mehreren der Ansprüche 12 bis 14, **dadurch gekennzeichnet, dass** der grüne Anthrachinonfarbstoff sich durch die Merkmale Molekulargewicht im Bereich von 50 bis 1.000 g/mol, einem Lichtabsorptionsmaximum in einem Wellenlängenbereich von 560 bis 700 nm, und durch wenigstens eine Anthrachinoneinheit im Molekül auszeichnet.

15. Verfahren gemäß einem oder mehreren der Ansprüche 12 bis 14, **dadurch gekennzeichnet, dass** der grüne Anthrachinonfarbstoff auszuwählen ist aus der Gruppe 1,4-Bis(p-tolylamino)anthrachinon, 1,4-Bis[[4-(1,1-dimethylethyl)phenyl]amino]-5,8-dihydroxyanthrachinon und 1,4-Bis(4-butylanilino)-5,8-dihydroxyanthrachinon.
